# FASCICULE DE BREVET EUROPEEN

(11) **EP 0 369 862 B1**
(45) Date de publication et mention de la délivrance du brevet: **09.03.1994**
(21) Numéro de dépôt: 89403091.5
(22) Date de dépôt: 09.11.1989
(51) Int. Cl.: B32B 17/10

(54) **Dispositif pour l'entraînement des rouleaux moteurs d'une calendreuse pour vitrages feuilletés et calandreuse équipée de ce dispositif**
Antriebsvorrichtung für die Antriebsrollen einer Verbundglas-Kalandur und damit ausgerüstete Kalandur
Driving device for laminated glass calender driving rollers and calender equipped with this device

(30) Priorité: 14.11.1988 FR 8814742
(43) Date de publication de la demande: 23.05.1990
(73) Titulaire: SAINT-GOBAIN VITRAGE INTERNATIONAL, 92400 Courbevoie (FR)
(72) Inventeur: Triffaux, Francis, F-60150 Thourotte (FR)
(74) Mandataire: Muller, René

(56) Documents cités:
- EP-A- 0 189 345
- DE-C- 821 449
- FR-A- 2 548 659
- US-A- 2 525 980
- US-A- 3 051 214

## Description

La présente invention concerne un dispositif pour l'entraînement des rouleaux-moteurs d'une calandreuse utilisée dans la fabrication des vitrages feuilletés, notamment dans l'assemblage des éléments constitutifs d'un vitrage feuilleté par calandrage, c'est-à-dire par passage desdits éléments empilés entre deux séries de rouleaux de pressage, ainsi que la calandreuse équipée de ce dispositif.

Les calandreuses connues pour ce type d'assemblage sont généralement équipées de deux séries de rouleaux : une série de rouleaux inférieurs disposés les uns à côté des autres, leur position pouvant être réglée indépendemment de façon à obtenir une pré-courbure correspondant à la courbure transversale désirée qui est généralement la courbure moyenne du vitrage, et une série de rouleaux supérieurs disposés sensiblement de la même façon. Les deux séries de rouleaux sont aussi généralement montées sur un cadre mobile pouvant pivoter autour d'un axe horizontal, de sorte que les rouleaux restent perpendiculaires au vitrage durant toute l'opération d'assemblage.

Le montage des rouleaux sur le cadre est réalisé selon le type de calandreuses, de façon fixe ou sur vérin.

L'entrainement du vitrage au cours de l'opération de calandrage est assuré par des rouleaux moteurs qui constituent généralement, une partie des rouleaux inférieurs. L'entrainement des rouleaux moteur est donné par un groupe moteur, moto-réducteur monté au bout de l'axe de pivotement du cadre mobile. Le mouvement est transmis par l'intermédiaire d'une chaîne, soit à un arbre s'étendant sur toute la largeur du cadre mobile et monté sur ce cadre en position fixe, soit dans une variante à un ensemble d'arbres cannelés et de cardans gui lui permettent de s'adapter aux variations en hauteur et en inclinaison existant entre les différents rouleaux-moteurs. A partir de l'arbre ou de l'ensemble d'arbres, le mouvement est transmis par d'autres chaînes vers les rouleaux-moteur.

Le document EP-A-0 189 345 divulgue un mécanisme d' entraînement en rotation où le mouvement est transmis par l' intermédiaire d' une chaîne à une roue dentée montée coaxialament sur le rouleau moteur et reliée rigidement à celui-ci.

Lorsque les rouleaux-moteur sont montés fixes par rapport au cadre pivotant, les variations en hauteur et en inclinaison entre les divers rouleaux-moteur ne proviennent que de la précourbure donnée aux ensembles de rouleaux de pressage. Lorsque les rouleaux-moteur sont montés par l'intermédiaire de vérins pneumatiques sur le cadre pivotant, l'arbre de transmission lorsqu'il est constitué d'un ensemble d'arbres doit en plus suivre les mouvements en hauteur transmis par les galets-moteur, du fait de leur montage sur vérins, au fur et à mesure du passage du vitrage dans la calandreuse.

Ce système fonctionne bien lorsque les vitrages sont peu courbés. Mais, pour les vitrages à courbures plus accentuées et/ou plus complexes, par exemple pour des vitrages dits de forme complexe, ce système amène des rigidités et des variations de vitesse de rotation des rouleaux-moteur les uns par rapport aux autres, parce que, d'une part, l'ensemble d'arbres de transmission résiste aux variations en hauteur qui sont imposées et, d'autre part, parce que les cardans sont progressivement amenés à travailler aux limites de leurs possibilités angulaires.

Ce système présente un autre inconvénient. La nécessité d'insérer dans l'ensemble d'arbres de transmission un cardan de part et d'autre d'un rouleau-moteur interdit d'accoler côte à côte deux rouleaux-moteur. Compte tenu de la quasi-nécessité d'insérer en plus un élément d'arbre cannelé, on est donc obligé, pour disposer d'un lit de pressage quasi-continu, d'interposer au minimum deux rouleaux fous entre deux rouleaux-moteur, ce qui est contradictoire avec la contrainte imposée pour un bon fonctionnement de la calandreuse qui veut qu'un rouleau-moteur doit toujours correspondre à la pointe du vitrage pour permettre son entrée dans la calandreuse.

Cette disposition n'est pas très gênante lorsqu'il s'agit d'assembler des vitrages peu courbés, de forme sensiblement trapézoïdale, dont la pointe avant se présente à peu près toujours au même endroit de la série de rouleaux. En revanche, dans le cas de vitrages plus courbés et de plus grandes dimensions, il est nécessaire d'augmenter le nombre de rouleaux-moteur et il est utile d'en disposer plusieurs côte à côte sur au moins une partie de la série de rouleaux de pressage.

L'invention propose un nouveau dispositif d'entraînement des rouleaux-moteur, qui obvie aux inconvénients cités.

Le dispositif d'entrainement des rouleaux-moteur selon l'invention comprend un arbre de transmission fixe et non déformable, monté sur le cadre mobile de la calandreuse, relié au groupe moteur par une chaîne ou courroie, et à chaque rouleau moteur par l'intermédiaire d'un système de transmission consistant en un renvoi d'angle et un ensemble articulé déformable dans une direction essentiellement verticale.

Le dispositif selon l'invention, en disposant sensiblement verticalement la partie déformable de la transmission a notamment pour avantage de réduire la rigidité induite par le système car les efforts sont essentiellement verticaux. Il accroît la possibilité de débattements verticaux.

Le système de transmission reliant l'arbre à un rouleau moteur présente un encombrement latéral réduit, ce qui permet un montage aisé de plusieurs de ces systèmes côte à côte.

Selon une réalisation de l'invention, l'ensemble articulé déformable est formé d'un arbre sensiblement vertical comprenant deux cardans et un arbre cannelé.

D'autres avantages et caractéristiques de l'invention apparaîtront dans la suite de la description faite en référence aux figures.

La figure 1 représente, en vue de face, une calandreuse équipée du dispositif de motorisation selon l'invention.

La figure 2 représente, en vue de côté, la calandreuse de la figure 1.

La figure 3 représente, en vue de côté, le montage d'un rouleau-moteur et de son dispositif d'entraînement.

La figure 4 est une vue en coupe selon AA du dispositif représenté sur la figure 3.

La figure 5 est une vue en coupe selon BB du dispositif représenté sur la figure 3.

La figure 6, représente, en vue de côté, une variante du montage d'un rouleau moteur.

La figure 7 est une vue en coupe selon CC du dispositif représenté sur la figure 6.

La figure 8 est une vue en coupe selon DD du dispositif représenté sur la figure 6.

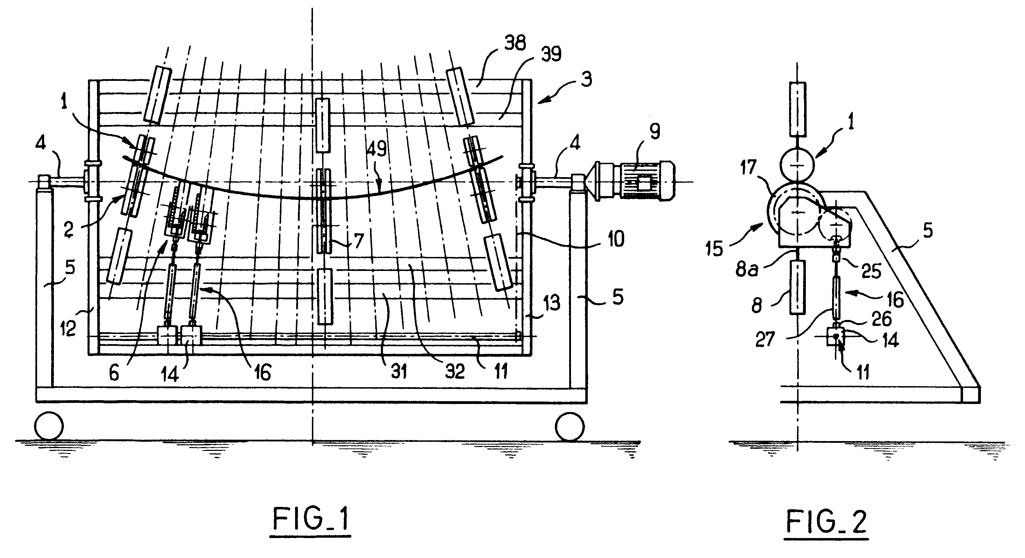

Les figures 1 et 2 représentent, en vue de face et de côté, une calandreuse flottante équipée d'un dispositif de motorisation selon l'invention. Par calandreuse flottante, on entend selon l'invention, une calandreuse équipée de rouleaux de pressage montés sur des vérins pneumatiques ou hydrauliques.

Le dispositif selon l'invention est particulièrement intéressant pour ce type de calandreuse qui permet une plus grande variation de hauteur pour les rouleaux de pressage. Il est bien entendu applicable à d'autres types de calandreuse.

La calandreuse comprend un ensemble de rouleaux de pressage supérieur 1 et un ensemble de rouleaux de pressage inférieur 2, montés dans un cadre mobile 3 pouvant pivoter autour d'un axe 4 porté par un bâti 5.

L'ensemble de rouleaux de pressage inférieur 2 comporte des rouleaux-moteur 6 et des rouleaux fous 7 constitués d'une paire de deux galets. Chaque rouleau, est monté au bout de la tige d'un vérin pneumatique 8, un rouleau inférieur étant disposé face à un rouleau supérieur. Sur la figure 1, les vérins 8 agissant sur les rouleaux-moteur ne sont pas représentés.

L'entrainement est commandé par un ensemble moto-réducteur 9 monté au bout de l'axe de pivotement 4. Le moto-réducteur entraîne, au moyen de la chaîne 10, un arbre 11, horizontal, rigide, prenant appui sur les deux montants verticaux 12 et 13 du cadre mobile 3.

Des renvois d'angle 14, traversés par l'arbre 11, transmettent le mouvement vers un ensemble rouleau-moteur 15, par le biais d'un système de transmission articulé 16. La position des renvois d'angle 14 est réglable le long de l'arbre 11.

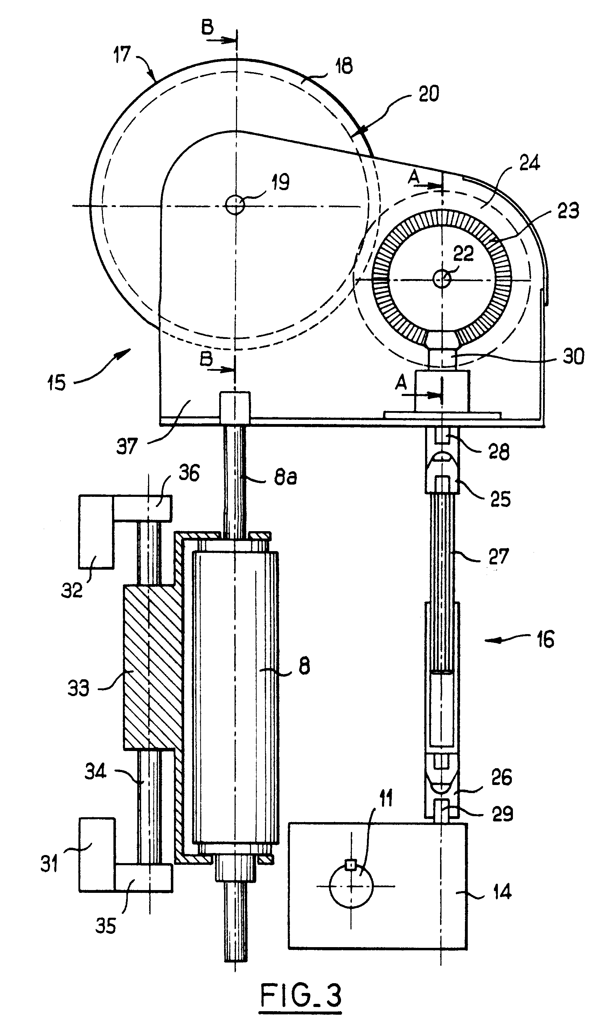

La figure 3 montre plus en détail, en vue de côté, le montage d'un ensemble rouleau-moteur 15, porté par un vérin 8 et relié par l'intermédiaire de son système de transmission 16 comprenant le renvoi d'angle 14 à l'arbre 11.

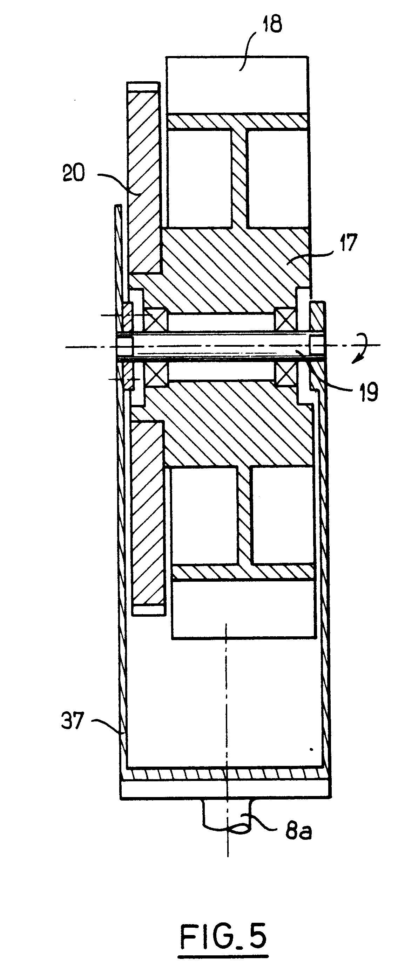

L'ensemble rouleau-moteur 15 comprend ici un galet 17 revêtu d'une couche de caoutchouc 18. Le galet est monté sur roulements autour de l'axe 19. Une roue dentée 20 est montée de façon solidaire contre le galet 17, comme représentée sur la figure 5 qui est une coupe de l'ensemble rouleau-moteur 15, au niveau du galet 17.

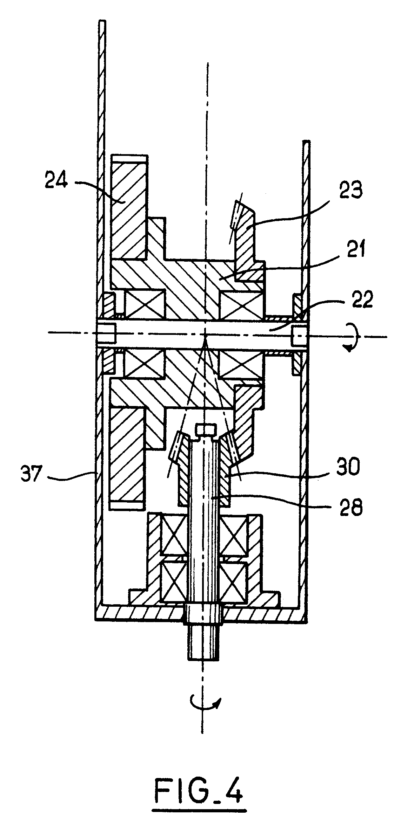

L'ensemble rouleau-moteur 15 est relié à l'arbre 11, par un système de transmission qui comprend dans sa partie supérieure un moyeu 21 monté sur des roulements autour d'un axe 22, ce moyeu portant d'une part, une roue dentée 24 et, d'autre part, une autre roue dentée et cônique 23. Cet ensemble supérieur est représenté en détail et en coupe sur la figure 4. Sous cet ensemble supérieur, le système de transmission comprend un ensemble articulé déformable 16 comprenant deux cardans 25 et 26 montés aux deux extrémités d'un arbre cannelé 27. Le cardan 25 est relié à un arbre 28 au bout duquel est monté un pignon cônique 30 s'adaptant sur la roue 23. Le cardan 26 est relié à l'arbre de sortie 29 à 90° du renvoi d'angle 14.

La roue dentée 24 s'adapte à la roue dentée 20, de telle sorte que le pignon 30 et les roues 23, 24 et 20 constituent un système d'engrenages qui associé à l'ensemble articulé constitué par les cardans et l'arbre cannelé, transmet le mouvement de rotation de l'arbre de sortie du renvoi d'angle 14 au galet 17.

Comme représenté sur la figure 3, l'ensemble rouleau-moteur 15 est, d'autre part, monté au bout de la tige 8a du vérin 8. Le montage est réalisé par l'intermédiaire d'une chape 37 solidaire de l'extrémité de la tige du vérin, cette chape portant les deux axes 19 et 22. Le vérin 8 est monté réglable en hauteur et en inclinaison sur les poutres 31 et 32. Le vérin 8 est tenu par une platine 33 portée par une colonne 34. La position en hauteur du vérin 8 est déterminée en bloquant la platine 33 sur la colonne 34 à la hauteur désirée. La colonne 34 est elle-même tenue par deux pattes 35 et 36 fixées aux poutres 31 et 32 du cadre mobile 3, de façon à obtenir l'inclinaison désirée dans le plan de pressage.

Le dispositif fonctionne de la manière suivante :
On commence par déterminer la pré-courbure des ensembles de pressage 1 et 2 en réglant l'inclinaison de toutes les colonnes 34 et la hauteur de tous les vérins 8 sur leur colonne 31 et 32 pour les vérins de l'ensemble de pressage inférieur et 38 et 39 pour les vérins de l'ensemble de pressage supérieur.

On règle ensuite la position de tous les renvois d'angle 14, le long de l'arbre 11, de telle sorte que l'inclinaison de l'arbre cannelé 27 par rapport au vérin 8 correspondant soit minimale. Ainsi, les cardans 25 et 26 travailleront toujours dans des conditions optimales. En outre, grâce à ce dispositif, les axes de rotation des arbres 28 et 29 sont toujours parallèles, quelle que soit l'inclinaison donnée au rouleau-moteur 6. Les galets-moteur 17 seront donc toujours animés de la même vitesse de rotation.

Au fur et à mesure que passe le vitrage 49 dans la calandreuse, du fait des variations de sa courbure transversale, la hauteur des paires de rouleaux de pressage supérieur et inférieur, montés en opposition, varie. Ceci se traduit par des déplacements du piston des vérins 8 et, dans le cas des rouleaux-moteur, par des déplacements équivalents de la tige cannelée des arbres 27. Le déplacement de ces tiges s'effectue dans le même plan que l'effort principal qui tend à déplacer les rouleaux de pressage. La résistance à ce déplacement est minimale.

En outre, l'encombrement latéral des ensembles de rouleaux-moteur 6 est très réduit, ce qui permet de les disposer côte à côte lorsque c'est nécessaire.

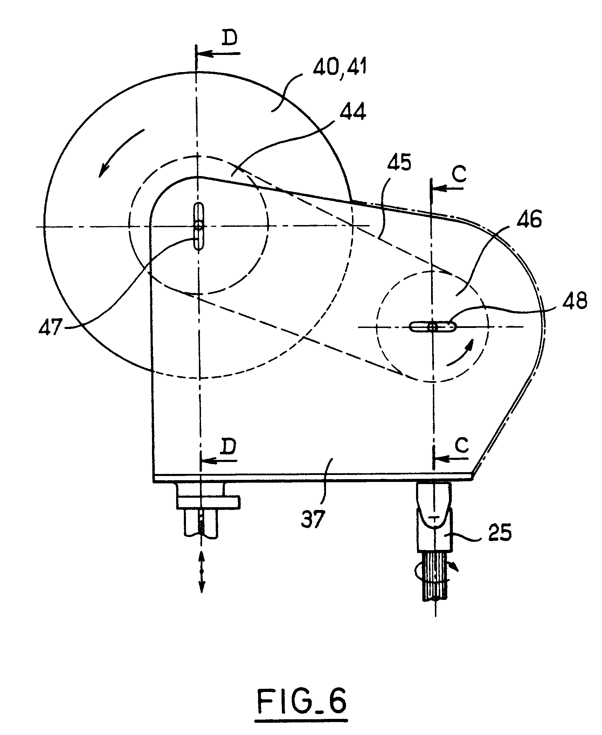

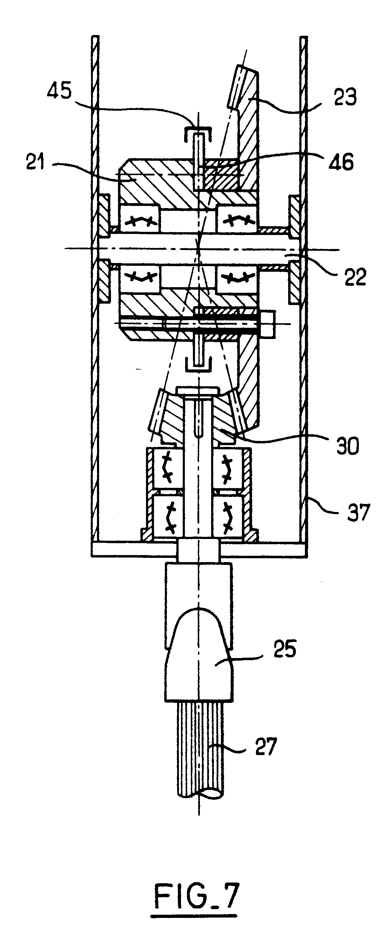

Sur les figures 6, 7 et 8 sont représentés une variante de montage d'un rouleau-moteur.

Dans cette variante, chaque rouleau-moteur est constitué d'une paire de galets et est entrainé par une chaine centrale.

L'ensemble rouleau-moteur 15 comprend deux galets 40 et 41 revêtus d'une couche en caoutchouc 42 et 43 et une roue dentée 44 située entre les deux galets.

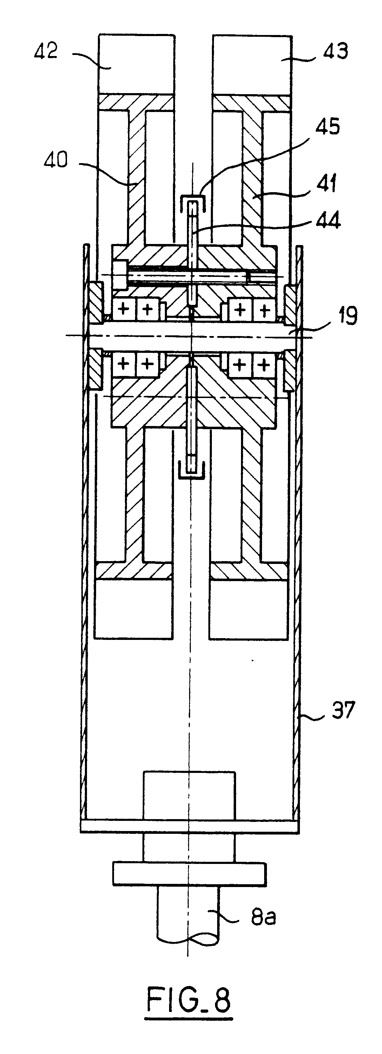

Le galet 40, la roue dentée 44 et le galet 41 sont montés de façon solidaire l'un contre l'autre et sur des roulements autour de l'axe 19, comme représenté sur la figure 8.

La roue dentée 44 est reliée par une chaîne 45 à une deuxième roue dentée 46 boulonnée sur le moyeu 21 monté sur des roulements autour de l'axe 22. Les deux roues dentées 44 et 46 sont situées dans le même plan.

Les autres éléments de transmission, roue dentée et cônique 23, pignon cônique 30, cardan 25 et arbre cannelé 27 sont identiques à ceux décrits dans l'exemple de réalisation représenté sur la figure 3. De même, le montage est réalisé par l'intermédiaire de la chape 37 solidaire de l'extrémité de la tige du vérin et portant les axes 19 et 22. La distance entre les axes 19 et 22 peut être réglée par déplacement de l'axe 19 le long de la fente 47 et/ou de l'axe 22 le long de la fente 48, de façon à conférer à la chaîne 45 une tension adéquate.

## Revendications

1. Dispositif pour l'entraînement des rouleaux-moteur d'une calandreuse pour le pressage des vitrages feuilletés comprenant au moins une série de rouleaux de pressage montés sur un cadre mobile, au moins un de ces rouleaux de pressage étant moteur en étant animé par un groupe moteur auquel il est relié par un système de transmission, caractérisé en ce qu'il comprend un arbre de transmission fixe et non déformable (11), monté sur le cadre mobile (3), relié au groupe moteur (9) par une chaîne (10) ou courroie et à chaque rouleau moteur (6) par l'intermédiaire d'un système de transmission consistant en un renvoi d'angle (14) et un ensemble articulé (16) déformable dans une direction essentiellement verticale.

2. Dispositif selon la revendication 1, caractérisé en ce que l'ensemble articulé déformable est formé d'un arbre sensiblement vertical comprenant deux cardans (25,26) et un arbre cannelé (27).

3. Dispositif selon une des revendications 1 ou 2, caractérisé en ce que chaque rouleau est monté sur la tige (8a) d'un vérin (8) et solidairement à l'extrémité de l'ensemble articulé déformable.

4. Dispositif selon une des revendications 1 à 3, caractérisé en ce que le système de transmission utilise un ensemble d'engrenages disposé entre le rouleau-moteur (6) et l'extrémité de l'ensemble articulé déformable (16).

5. Dispositif selon une des revendications 1 à 3, caractérisé en ce que le système de transmission utilise un ensemble d'engrenages associé à une transmission par chaîne et roues dentées entre le rouleau-moteur (6) et l'extrémité de l'ensemble articulé déformable (16).

6. Dispositif selon la revendications 5, caractérisé en ce que le rouleau moteur (6) est formé de 2 galets (40,41) entre lesquels est disposée la roue dentée (44) du système de transmission.

7. Calandreuse comprenant une série de rouleaux supérieurs (1) et une série de rouleaux inférieurs (2), une partie des rouleaux inférieurs étant moteurs, caractérisee en ce qu'elle est équipée d'un dispositif selon une des revendications 1 à 6

8. Calandreuse flottante, caractérisée en ce qu'elle est équipée d'un dispositif selon une des revendications 1 à 6.

## Claims

1. Device for driving the driving rollers of a calenderer for pressing laminated panes, comprising at least one series of pressing rollers mounted on a movable frame, at least one of these pressing rollers being driving, by being driven by a motor unit, to which it is connected by a transmission system, characterized in that it comprises a fixed, non-deformable transmission shaft (11), mounted on the movable frame (3), connected to the motor unit (9) by a chain (10) or belt and to each driving roller (6) by means of a transmission system consisting of a bevel gear (14) and an articulated assembly (16) deformable in a substantially vertical direction.

2. Device according to Claim 1, characterized in that the deformable articulated assembly is composed of a substantially vertical shaft comprising two cardan joints (25, 26) and a splined shaft (27).

3. Device according to one of Claims 1 or 2, characterized in that each roller is mounted on the rod (8a) of a jack (8) and firmly connected to the end of the deformable articulated assembly.

4. Device according to one of Claims 1 to 3, characterized in that the transmission system uses a system of gears disposed between the driving roller (6) and the end of the deformable articulated assembly (16).

5. Device according to one of Claims 1 to 3, characterized in that the transmission system uses a system of gears associated with a transmission by chain and toothed wheels between the driving roller (6) and the end of the deformable articulated assembly (16).

6. Device according to Claim 5, characterized in that the driving roller (6) is composed of two disc rollers (40, 41), between which is disposed the toothed wheel (44) of the transmission system.

7. Calenderer comprising a series of upper rollers (1) and a series of lower rollers (2), a portion of the lower rollers being driving, characterized in that it is provided with a device according to one of Claims 1 to 6.

8. Floating calenderer, characterized in that it is equipped with a device according to one of Claims 1 to 6.

## Patentansprüche

1. Vorrichtung zum Antrieb von Antriebsrollen eines Kalanders für das Pressen von Verbundglasscheiben, welche wenigstens einen Satz auf einem beweglichen Rahmen befestigte Druckrollen umfaßt, wobei wenigstens eine dieser Druckrollen eine Antriebsrolle ist, die von einer Motoreinheit angetrieben wird, mit der sie durch ein Transmissionssystem verbunden ist, **dadurch gekennzeichnet,** daß sie eine feste, starre, auf dem beweglichen Rahmen (3) angeordnete Transmissionswelle (11) umfaßt, die mit der Motoreinheit (9) über eine Kette (10) oder einen Treibriemen und mit jeder Antriebsrolle (6) über ein Transmissionssystems verbunden ist, das aus einem winkeltrieb (14) und einer Gelenkeinheit (16) besteht, die in einer im wesentlichen senkrechten Richtung flexibel ist.

2. Vorrichtung nach Anspruch 1, **dadurch gekennzeichnet,** daß die flexible Gelenkeinheit aus einer im wesentlichen senkrechten Welle besteht, welche zwei Kardangelenke (25,24) und eine gerillte Welle (27) umfaßt.

3. Vorrichtung nach Anspruch 1 oder 2, **dadurch gekennzeichnet,** daß jede Rolle auf der Stange (8a) eines Zylinders (8) befestigt und fest mit dem Ende der flexiblen Gelenkeinheit verbunden ist.

4. Vorrichtung nach einem der Ansprüche 1 bis 3, **dadurch gekennzeichnet**, daß das eingesetzte Transmissionssystem eine Getriebeeinheit ist, die zwischen der Antriebsrolle (6) und dem Ende der flexiblen Gelenkeinheit (16) angeordnet ist.

5. Vorrichtung nach einem der Ansprüche 1 bis 3, **dadurch gekennzeichnet,** daß das eingesetzte Transmissionssystem eine Getriebeeinheit ist, die mit einer Ketten- und Zahnradkraftübertragung zwischen der Antriebsrolle (6) und dem Ende der flexiblen Gelenkeinheit (16) verbunden ist.

6. Vorrichtung nach Anspruch 5, **dadurch gekennzeichnet,** daß die Antriebsrolle (6) aus zwei Laufrollen (40,41) gebildet ist, zwischen denen das Zahnrad (44) des Transmissionssystems angeordnet ist.

7. Kalander, der einen Satz obere Rollen (1) und einen Satz untere Rollen (2), wobei ein Teil der unteren Rollen angetrieben ist, umfaßt, **dadurch gekennzeichnet**, daß er mit einer Vorrichtung nach einem der Ansprüche 1 bis 6 ausgerüstet ist.

8. Freibeweglicher Kalander, **dadurch gekennzeichnet,** daß er mit einer Vorrichtung nach einem der Ansprüche 1 bis 6 ausgerüstet ist.
